Europäisches Patentamt

European Patent Office

Office européen des brevets

(19)

(11) Publication number: **0 031 256**
**B1**

(12) **EUROPEAN PATENT SPECIFICATION**

(45) Date of publication of patent specification: **17.07.85**

(21) Application number: **80304686.1**

(22) Date of filing: **22.12.80**

(51) Int. Cl.⁴: **C 04 B 14/18, C 04 B 14/08,**
**C 04 B 28/04, C 04 B 38/08,**
**C 04 B 38/10, E 04 B 1/74**

(54) **Dry mix for forming insulating compositions and thermally insulated containers made from said compositions, sprayable insulating compositions preparable from said dry mix, and a method of applying insulating material using said sprayable compositions.**

(30) Priority: **21.12.79 GB 7944112**
**04.02.80 GB 8003598**

(43) Date of publication of application:
**01.07.81 Bulletin 81/26**

(45) Publication of the grant of the patent:
**17.07.85 Bulletin 85/29**

(84) Designated Contracting States:
**BE CH DE FR GB IT LI LU NL SE**

(56) References cited:
**DE-A-2 625 675**
**DE-A-2 727 615**
**DE-C- 827 617**
**FR-A- 503 822**
**US-A-1 521 813**

(73) Proprietor: **HEWHAND LIMITED**
**70/71 New Bond Street**
**London W1 (GB)**

(72) Inventor: **Hacker, Dennis Jon**
**31 Clarke Court Walsingham Road**
**Hove East Sussex (GB)**

(74) Representative: **Bizley, Richard Edward et al**
**BOULT, WADE & TENNANT 27 Furnival Street**
**London EC4A 1PQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention is concerned with a dry mix for mixing with water to produce an insulating composition, uses of such a composition, a sprayable insulating composition which may be prepared from the dry mix and a method of applying insulating material to an article, area or building structure.

In a particularly preferred aspect the invention provides a cold mixable and cold curable non-combustible, non-toxic material that is useful as insulation and as a fire, acoustic and weather barrier and which may be sprayed onto any substrate that is capable of receiving the material. The invention also teaches the pressure feeding of pre-expanded perlite particles without destroying the geodedic structure and strength of the particles and the insulation qualities of cold state perlite. The material can also be used to fill confined spaces such as wall cavities and attics and hollow partitions used in the construction industry and can be used for fire, acoustic and insulation barriers for vehicles, ships, transporters and any other form of container that has need of thermal insulation for high and low temperatures.

Sprayed or foamed-in-place insulation materials presently in use are generally derived from petrochemical products, either as a source of the basic materials mass or as a source of bonding or adhesive agents thereafter. These materials are not only becoming increasingly expensive and difficult to obtain, but also can, by virtue of their combustibility become fire hazards and give rise to toxic and lethal fumes and smoke when used in buildings or other confined areas. Petrochemical products used as external insulation can degrade from exposure to extreme weather conditions and solar radiation. Accordingly, lamination or coating to provide a barrier against weathering may be required.

The usual method for overcoming fire hazard risks in insulation is to use a dry board insulation material such as Vermiculite or Gypsum. These materials have the disadvantage of both being subject to water absorption and a tendency to expand, increase drag weight and pull away in humid or extreme weather conditions. In addition, dry boards have to be cut to shape to encase angles etc. Also, dry insulation panels are restricted by the very nature of their basic structures, to interior use.

The present invention allows the on-site use of cold state, pre-expanded perlite particles (loose form) which may be pre-mixed in a cold state and thereafter passed to a spray gun nozzle without fracture or breakdown of the natural geodedic strength or insulation qualities of expanded perlite particles whereby a coating on predetermined thickness, e.g. up to an immediate 5 cm (2 inches), can be sprayed and thus be applied to any substrate capable of receiving it, following any angles or contours of the substrate with a uniformity of desired thickness of coating. Such coatings can provide pre-determined insulation requirements plus having the ability to act as fire barriers that will not degrade or emit toxics at temperatures in excess of 930°C (1700°F) for periods of time depending upon the initial insulation thickness. Such insulation has no need of heat for curing apart from an ambient temperature in excess of 4°C (40°F), and, by the nature of the aggregate used, i.e. expanded perlite particles, the material cost is low and the material is also abundant.

According to the present invention there is provided a dry mix for mixing with water to produce an insulating compound curable at ambient temperature, which dry mix comprises expanded perlite, Portland cement, hydrated lime and diatomite.

More preferably, the mix contains 100—120 parts by volume of expanded perlite, 20—30 parts by volume of Portland cement, 0.5—2.0 parts by volume of hydrated lime and 0.1—1.0 parts by volume of diatomite.

Even more preferably the mix contains 105—115 parts by volume of expanded perlite, 24—26 parts by volume of Portland cement, 0.5—1.5 parts by volume of hydrated lime and 0.25—0.75 parts by volume of diatomite.

In a compositional aspect, this invention also provides a sprayable insulating composition curable at ambient temperature comprising a dry mix of the invention, preferably a dry mix of 100—120 parts by volume of expanded perlite, 20—30 parts by volume of Portland cement, 0.5—2.0 parts by volume of hydrated lime and 0.1—1.0 parts by volume of diatomite, of the ingredients of the dry mix separately or in any combination admixed with an aqueous solution of water soluble foaming agent, preferably containing 1.5 to 12.5 g per litre (0.25—2 ounce per Imperial gallon) of the agent, preferably at a level of 2 to 2.6 kg of dry mix per litre of solution (20—26 pounds per Imperial gallon).

In a method aspect, the invention provides a method of applying insulating material to an article, area (e.g. a confined area) or building structure by spraying the same with the foregoing composition at a pressure of 2.1 to 3.5 kg/cm$^2$ (3—50 psi).

The composition of this invention may by mixing the above-defined dry mix with water can be cold cured in a number of applications. They can be used for insulation of ventilation and window fittings and for insulation of floors, walls, ceilings structural beams etc. They can also be used to make separate insulating structures, e.g. thermally insulating doors or containers. Thus, in another aspect, the invention provides a thermally insulated box comprising an insulating wall which has been formed by hardening or setting to a desired shape a composition as described or the ingredients thereof. The container may, if desired, be provided with an outer skin, e.g. a skin made of metal. Alternatively, an "inner" skin may be provided. Furthermore, the invention embraces the possibility of only a part of the container being insulated by the use of an insulating wall as defined. However, it is preferred that the container be made entirely or in major part from an insulating wall as defined.

The insulating wall in the container may be constituted by a plurality of panels which may be formed of desired dimensions using conventional tools.

Where the insulating wall used in the present container is constituted by a plurality of panels, those panels may be bonded together to form the desired insulating structure by the use of an adhesive agent. A suitable adhesive agent is a paste mixture of vermiculite (exfoliated mica), talc and aqueous sodium silicate solution (preferably containing 20 to 22 parts of water per 100 parts of sodium silicate).

"Portland cement" as used herein is a mixture of Ca, Si, Al, Fe and Mg, generally corresponding to calcium silicate, $3CaO \cdot SiO_2$, dicalcium silicate, $2CaO \cdot SiO_2$, tricalcium aluminate, $3CaO \cdot Al_2O_3$, tetracalcium-aluminaferrite, $4CaO \cdot Al_2O_3 \cdot Fe_2O_3$ and calcium sulfate, $CaSO_4$. It will be understood that the composition of Portland cement can be varied over a fairly wide range. However, the Portland cement contemplated for use in accordance with the invention will normally comprise about 75% of calcium silicates, 5—10% of calcium aluminates, 5% of $CaSO_4$, less than 1% of sodium or potassium oxides, 2—9% of MgO and 5—10% of calcium-aluminate-iron compounds, the foregoing percentages being by weight. Portland cement used in this invention can be a commercially available product, such as any commercial (hydraulic) cement.

The Portland cements used in the invention generally have a density of 800 to 881 $kg/cm^3$ (50—55 $lbs/ft^3$). Therefore, "20—30 parts" by volume corresponds to about 1.36 to 2.27 kg (3—5 lbs) parts by weight.

"Expanded perlite" as used herein will have a bulk density of 80 to 240 $kg/m^3$ (5—15 pounds per cubic foot) and a particle size of 4—100 mesh (Tyler), (4—7 mm). Preferably, the perlite will have a density of 96 to 240 $kg/m^3$ (6—15 $lb/ft^3$) and a particle size of 3,500—5,500 microns. Accordingly, "100—120 parts by volume" is equivalent to 567 to 708 g (20—25 ounces) parts by weight of expanded perlite having a density of 82 $kg/m^3$ (5.15 pounds per cubic foot) and 708 g (25 ounces) parts by weight of expanded perlite having a density of 128 to 144 kg per $M^3$ (8—9 $lb/ft^3$).

It will be appreciated that expanded perlites are products of the expansion and vesiculation of perlitic minerals, which are volcanic glasses, among which are included perlite, vitrophore, pitchstone and some kinds of obsidian. The expanded perlite is obtained by crushing the mineral to a preselected particle size and heating the crushed materials at 930—1100°C (1700—2000°F) to produce plastic mineral material, from which combined water is expelled, to yield a vesicular material of considerably greater volume than before expansion.

"Hydrated lime" as used herein means $CaO \cdot H_2O$. This material has a density of 471 $kg/m^3$ (29.4 $lbs/ft^3$), so that 0.5—2 parts by volume are equivalent to 28.35 g (1 ounce) parts by weight.

"Diatomite" as used in the specification and claims means diatomaceous earth. This material is siliceous and consists of skeletons of diatoms or small marine animals. The material used in the practice of the invention will have a density of 128 to 160 $kg/m^3$ (8—10 pounds per cubic foot), corresponding to a particle size of 3,500—5,500 mesh. Therefore "0.1—1.0 part by volume" of diatomite corresponds to 2.5 grammes parts by weight. Preferably, the density of the diatomite used is 128 to 160 $kg/m^3$ (8—10 pounds per cubic foot) and the particle size, 3,500—5,500 mesh, which corresponds to 2.5 grammes parts by weight of diatomite.

Preferably the sprayable compositions of the invention may be made by combining the dry ingredients and blending the selected amount of dry mix with the aqueous solution of water-soluble foaming agent. The mixing can conveniently be done with a rotating mechanical paddle in a drum or container rotating in the opposite direction. Mixing is continued until the product becomes pastelike in consistency, which generally requires 2—3 minutes.

The sprayable mixture thus obtained can be sprayed from a screw pump-fed sprayer at an air pressure of 2.1 to 3.5 $kg/cm^2$ (30—50 psi). An air pressure of 2.5 to 3.2 $kg/cm^2$ (35—45 psi) is preferred. Sprayers suitable for the compositions of the invention are available commercially, for example, "Muller R-Tex" Mono Pump using the largest size feed screw to ensure that the geodedic structure of the expanded perlite particles is not crushed whilst they are being fed to the gun nozzle.

The diameter of the spray nozzle can be varied from .48 to 1.43 (cm (3/16—9/16 inch), but a nozzle diameter of .79 cm (5/16 inch) is generally acceptable. It will be understood that aeration of the composition occurs along with propulsion of the mixture onto a substrate or into a confined space in a static structure or building.

The shelf-life of the pastelike material obtained from the dry mix and the aqueous solution containing foaming agent is about 1 year, beyond which the material becomes too dense for spraying. It is therefore preferred that the material to be prepared at the site of use and applied within 1 hour of mixing.

It is recommended that the nozzle of the spray gun be held 20 to 46 cm (8—18 inches) from the surface being covered. It will be understood that thick coating can be obtained by multiple applications of the sprayable compositions of this invention, preferably with an interval of ½—2 hours between applications.

Preferably, the dry mix of the invention consists essentially of 105—115 parts by volume of expanded perlite, 20—30 parts by volume of Portland cement, 0.5—1.5 parts by volume of hydrated lime and 0.25—0.75 parts by volume of diatomite.

In making the sprayable compositions of the invention, the dry mix is preferably combined with an aqueous solution of water-soluble foaming agent at a level of 2 to 2.6 kg of dry mix per litre (20—26 pounds per gallon) of solution. The preferred ratio is 2—2.05 kg of dry mix per litre of solution (20—21 pounds per Imperial gallon).

The water-soluble foaming agent or air-entraining agent is of the anionic type, of which alkanol sulfates and alkyl or aryl sulfonates are exemplary. Alkanol sulfates include compounds of the formula $ROSO_3M$, wherein R is straight or branched chain alkyl group of 8—30 carbon atoms and M is sodium or potassium. An exemplary compound is sodium lauryl sulfate.

Alkyl and aryl sulfonates include sodium and potassium salts of sulfonic acids derived from alkanes, alkenes and aromatic hydrocarbons including alkylated aromatic hydrocarbons. Exemplary sulfonates are sodium/potassium hexadecyl sulfonate, benzyl sulfonate, phenyl sulfonate, naphthyl sulfonate and alkylarylsulfonates of the formula $R—Ar—SO_3M$ in which R is alkyl or 3—35 carbon atoms, aryl is phenylene or naphthylene with R and $SO_3M$ at any ring position and M is Na or K. Preferred foaming agents are of the $R—Ar—SO_3M$ type, that is, alkylaryl sulfonates. Most preferred are sodium alkylbenzenesulfonates derived from alkylbenzenes of 8—12 carbon atoms in the alkyl chain, e.g. nonylphenylsulfonates or dodecylbenzenesulfonates.

The amount of foaming agent is preferably 3.1 to 9.3 g per litre (0.5—1.5 ounces per gallon) of solution. When the mixture is to be sprayed on a surface, the preferred level is 3.1 to 6.2 g per litre (0.5—1.0 ounce per gallon). If the mixture is to be sprayed into a confined area, e.g. between structural partitions, higher levels of 6.2 to 9.3 g per litre (1.0—1.5 ounce per gallon) are preferred.

Compositions thus sprayed into cavities or onto surfaces will generally set up within ½ to 1 hour under ambient conditions (that is, become bonded to the inner surfaces of said cavities). Complete curing under ambient conditions requires 12—16 hours depending upon the composition of substrate surfaces, at which point the product is a rigid hard set material that is bonded and joined to any surface that it touches. After a further 20 hours, any attempt to remove the material will result in the destruction of the substrate.

When thick coatings of the sprayable compositions of the invention are to be applied, addition of up to 2.5 parts by volume (5—10 grammes parts by weight) of bentonite decreases the tendency of the uncured composition to delaminate from the surface being coated. The bentonite is preferably added to the dry-mix component prior to combination with the aqueous solution of foaming agent.

The ultimate strength of the cured composition of this invention can be improved by inclusion of up to 5 parts by volume of glass fibre or mineral wool in the dry mix. The fibres will generally be .63 to 3.81 cm (1/4—1½ inches) in length, preferably 1.93 cm (3/4 inches) and have a density of 20 kg/m³ (1 1/4 lbs/ft³). The mineral wool should be free from oils or grease and dry-faced.

Contemplated equivalents of fibre glass and mineral wool are sawdust, wood chips and paper shavings, provided that their density is 32 to 80 kg/m³ (2—5 pounds per cubic foot) and particle size is 2,000—3,500 µm, preferably 2,500 µm.

The most preferred compositions of this invention are those wherein in the dry mix contains 105—115 parts by volume of expanded perlite, 20—30 parts by volume of Portland cement, 0.5—1.5 parts by volume of hydrated lime and 0.25—0.75 parts by volume of diatomite; the aqueous solution contains 3.1 to 9.3 g per litre (0.5—2.5 ounce per gallon) of alkylaryl sulfonate foaming agent; and the level of dry mix is 2 to 2.05 kg per litre (20—21 pounds per gallon) of solution.

Examples are given to illustrate the invention and are to be construed as merely illustrative and not limiting upon the scope of the invention.

Example 1

Dry mix was obtained by blending the following ingredients:

|  | Parts by volume | Parts by weight |
|---|---|---|
| Expanded perlite particles | 109 | 567 g (20 ounces) |
| Portland cement | 24 | 1588 g (56 ounces) |
| Diatomite | 0.50 | 3—4 grammes |
| Hydrated lime | 1 | 28.35 g (1 ounce) |

The blend was stored in moisture proof bags prior to use.

The dry mix, at time of use, was mixed by rotating mixing mechanical paddle in a drum container rotating in the opposite direction with an aqueous solution of 4.6 g per litre (0.75 ounce per gallon) of an air entraining agent (sodium alkylbenzenesulfonates).

The amount of dry mix was 10 kg (22 pounds) and the amount of solution was 4.5 kg (10 lbs).

The composition was made by adding dry mix in portions to the solution and mixing until a paste the consistency of thick gruel was obtained. The resulting paste was fed to a screw fed pump and pressure fed to an air nozzle at a pressure of 2.8 kg per sq cm (40 psi) at the point of ejection and mixing through an orifice of .8 cm (5/16 inch) diameter. The mixture was aerated and carried to the surface being covered, the spray gun being held at a distance of from 20 to 46 cm (8 to 18 inches) from the surface.

The sprayed covering set up within 1 hour and was completely cured overnight at ambient conditions.

A coating produced as described above was applied to a structural steel member following and covering the steel contours to a 3.2 cm (1 1/4 inch (one and one quarter)) thickness, to evaluate the insulating qualities of the coating as a protective membrane for structural steel fire protection.

The structural steel member was a W10×46 section 3.762 m (30 inches) long and was submitted to ASTM Designation E119—73 Standard Fire Test of Building and Construction Materials.

The coating was subjected to fire exposure for 3 hours, and the maximum allowable individual thermocouple temperature was reached at 2 hours 52 minutes.

After testing the coating was still adhering to the steel member.

Further tests have shown that an increase of coating thickness will substantially increase the fire protection time given to structural steel, or any other area of fire hazard risk.

Example 2

A wet paste adapted for application to a confined space, such as a wall cavity or partition, was made as in Example 1, except that the level of sodium alkylbenzenesulfonates was 9.9 g per litre (1.6 ounces per gallon).

The same procedure was used as in Example 1, except that the nozzle of the spray apparatus was placed inside the cavity being filled and withdrawn gradually as the foamed material being applied was pushed back behind the nozzle. The material thus filling the cavity set up in ½—1 hour and reached a complete cure in 36 hours.

The confined space was insulated and structurally strengthened. In addition, the composition acted as a fire barrier and prevented the space from acting as a flue or chimney for fire, flames or toxic smoke.

Example 3

A coating suitable for direct application for spraying without risk of the uncured composition delaminating from the coated surface is made by adding 2.25 parts by volume (5—10 grammes parts by weight) of bentonite to the dry mix of Example 1. In this way, a coating build-up of 5 cm (2 inches) can be achieved. The thus-applied coating will remain stable until cured. Bentonite suitable for this purpose can be acquired commercially.

Example 4

Compositions of Example 1 can include 0.5—4.0 parts by volume (1.9 to 1.28 g (.675—4.5 ounces) parts by weight) of a fibrous filler, e.g. glass fibre averaging 1.9 cm (3/4 inches) in length and having a density of 48 kg/m$^3$ (3 pounds per cubic foot). Cured compositions containing fibre glass are stronger than the composition of Example 1.

The preceding Examples can be repeated with similar success by substituting the generically or specifically described reactants and/or operating conditions of this invention for those used in the preceding Examples.

From the foregoing description, one skilled in the art can easily ascertain the essential characteristics of this invention and, without departing from the scope thereof, can make various changes and modifications of the invention to adapt it to various usages and conditions.

## Claims

1. A dry mix for mixing with water to produce an insulating composition curable at ambient temperature, which dry mix comprises expanded perlite, Portland cement, hydrated lime and diatomite.

2. A dry mix as claimed in Claim 1 containing 100—120 parts by volume of expanded perlite, 20—30 parts by volume of Portland cement, 0.5—2.0 parts by volume of hydrated lime and 0.1—1.0 parts by volume of diatomite.

3. A dry mix as claimed in Claim 2 containing 105—115 parts by volume of expanded perlite, 24—26 parts by volume of Portland cement, 0.5—1.5 parts by volume of hydrated lime and 0.25—0.75 parts by volume of diatomite.

4. A dry mix as claimed in any one of Claims 1 to 3 also containing up to 2.5 parts by volume of bentonite.

5. A dry mix as claimed in any one of Claims 1 to 3 also containing up to 5 parts by volume of glass fibre or mineral wool.

6. A sprayable insulating composition curable at ambient temperature and comprising a dry mix as claimed in any one of Claims 1 to 5, or the ingredients thereof separately or in any combination, admixed with the aqueous solution of a water-soluble foaming agent, preferably containing 1.5 to 12.5 g per litre (0.25—2 ounce per Imperial gallon) of the agent and preferably 2 to 2.6 kg (20—26 pounds) of the dry mix being used per litre of aqueous solution (20—26 pounds per Imperial gallon).

7. A composition as claimed in Claim 6, wherein the aqueous solution contains 3.1 to 9.3 g per litre (0.5—1.5 ounce per Imperial gallon) of the water-soluble foaming agent.

8. A composition as claimed in Claim 5 or Claim 7, wherein the water-soluble foaming agent is an alkylaryl sulfonate.

9. A method of applying insulating material to an article, area of building structure which comprises spraying the article, area or building structure, at a pressure of 2.1 to 3.5 kg/cm² (30—50 psi), with a composition as claimed in any one of Claims 6 to 8.

10. A thermally insulated box comprising an insulating wall which has been formed by hardening or setting to a desired shape a composition comprising water and a dry mix as claimed in any one of Claims 1 to 5 or the ingredients thereof.


**Patentansprüche**

1. Trockengemisch zum Vermischen mit Wasser zur Herstellung einer bei Umgebungstemperatur aushärtbaren Isolier-Zusammensetzung, wobei das Trockengemisch expandierten Perlit, Portlandzement, Löschkalk und Diatomit enthält.

2. Trockengemisch nach Anspruch 1, enthaltend 100 bis 120 Vol.-Teile expandierten Perlit, 20 bis 30 Vol.-Teile Portlandzement, 0,5 bis 2,0 Vol.-Teile Löschkalk und 0,1 bis 1,0 Vol.-Teile Diatomit.

3. Trockengemisch nach Anspruch 2, enthaltend 105 bis 115 Vol.-Teile expandierten Perlit, 24 bis 26 Vol.-Teile Portlandzement, 0,5 bis 1,5 Vol.-Teile Löschkalk und 0,25 bis 0,75 Vol.-Teile Diatomit.

4. Trockengemisch nach einem der Ansprüche 1 bis 3, welches ebenfalls bis zu 2,5 Vol.-Teile Bentonit enthält.

5. Trockengemisch nach einem der Ansprüche 1 bis 3, welches ebenfalls bis zu 5 Vol.-Teile Glasfaser oder Mineralwolle enthält.

6. Sprühbare Isolier-Zusammensetzung, die bei Umgebungstemperatur aushärtbar ist und ein Trockengemisch nach einem der Ansprüche 1 bis 5 umfaßt oder die Bestandteile davon gesondert oder in beliebiger Kombination enthält, vermischt mit der wässrigen Lösung eines wasserlöslichen Schaumbildners, wobei sie vorzugsweise 1,5 bis 12,5 g pro Liter (0,25—2 ounce per Imperial gallon) des Schaumbildners enthält und vorzugsweise 2 bis 2,6 kg (20—26 pounds) des Trockengemisches pro Liter der wässrigen Lösung (20—26 pounds per Imperial gallon) verwendet werden.

7. Zusammensetzung nach Anspruch 6, worin die wässrige Lösung 3,1 bis 9,3 g pro Liter (0,5—1,5 ounce per Imperial gallon) des wasserlöslichen Schaumbildners enthält.

8. Zusammensetzung nach Anspruch 5 oder Anspruch 7, worin der wasserlösliche Schaumbildner ein Alkylarylsulfonat ist.

9. Verfahren zur Aufbringung von Isoliermaterial auf einen Gegenstand, eine Fläche oder eine Gebäudestruktur, wobei der Gegenstand, die Fläche oder Gebäudstruktur unter einem Druck von 2,1 bis 3,5 kg/cm² (30—50 psi) mit einer Zusammensetzung nach einem der Ansprüche 6 bis 8 besprüht werden.

10. Wärmisolierter Behälter, umfassend eine Isolierwand, die durch Härten oder Fixierten einer Zusammensetzung, die Wasser und ein Trockengemisch gemäß einem der Ansprüche 1 bis 5 oder die Bestandteile davon enthält, zu einer gewünschten Form gebildet wurde.


**Revendications**

1. Mélange sec destiné à être mélangé avec de l'eau pour préparer une composition isolante durcissable à la tempéraambiante, mélange sec qui comprend de la perlite expansée, du ciment Portland, de la chaux hydratée et de la diatomite.

2. Mélange sec tel que revendiqué dans la revendication 1, contenant 100 à 120 parties en volume de perlite expansée, 20 à 30 parties en volume de ciment Portland, 0,5 à 2 parties en volume de chaux hydratée et 0,1 à 1 partie en volume de diatomite.

3. Mélange sec tel que revendiqué dans la revendication 2, contenant 105 à 115 parties en volume der perlite expansée, 24 à 26 parties en volume de ciment Portland, 0,5 à 1,5 partie en volume de chaux hydratée et 0,25 à 0,75 partie en volume de diatomite.

4. Mélange sec tel que revendiqué dans l'une quelconque des revendications 1 à 3, contenant également jusqu'à 2,5 parties en volume de bentonite.

5. Mélange sec tel que revendiqué dans l'une quelconque des revendications 1 à 3, contenant également jusqu'à 5 parties en volume de fibres de verre ou de laine minérale.

6. Composition isolante pulvérisable, durcissable à la température ambiant et comprenant un mélange sec tel que revendiqué dans l'une quelconque dessrevendications 1 à 5, ou les ingrédients de ce mélange séparément ou en une quelconque combinaison, mélangés avec la solution aqueuse d'un agent moussant soluble dans l'eau, de préférence contenant 1,5 à 12,5 g/l (0,25—2 onces par gallon Impérial) de l'agent et, de préférence, 2 à 2,6 kg (20—26 livres) du mélange sec étant utilisé par litre de solution aqueuse (20—26 livres par gallon Impérial).

7. Composition telle que revendiquée dans la revendication 6, dans laquelle la solution aqueuse contient 3,1 à 9,3 g/l (0,5—1,5 once par gallon Impérial) de l'agent moussant soluble dans l'eau.

8. Composition telle que revendiquée dans la revendication 5 ou dans la revendication 7, dans laquelle l'agent moussant soluble dans l'eau est un alkylaryl-sulfonate.

9. Procédé d'application de matière isolante sur un article, une surface ou une charpente de bâtiment, qui consiste à pulvériser sur l'article, la surface ou la charpente de bâtiment, sous une pression de 2,1 à 3,5 kg/cm² (2,1 à 3,5 bars) (30—50 psi), une composition telle que revendiquée dans l'une quelconque des revendications 6 à 8.

10. Stalle thermo-isolée comprenant une paroi isolante qui a été formée par durcissement ou par fixation à une forme désirée d'une composition comprenant de l'eau et un mélange sec tel que revendiqué dans l'une quelconque des revendications 1 à 5 ou les ingrédients de ce mélange.